# FASCICULE DE BREVET EUROPEEN

(11) **EP 1 067 360 B1**
(45) Date de publication et mention de la délivrance du brevet: **04.04.2007**
(21) Numéro de dépôt: 00401903.0
(22) Date de dépôt: 03.07.2000
(51) Int. Cl.: G01B 5/10, G01B 7/12, G01B 7/287, B07C 5/08, B65C 3/00, B65C 9/04

(54) **Dispositif d'évaluation de la géométrie d'articles transportés par un convoyeur**
Vorrichtung zur Erfassung der Geometrie von auf einem Transportband beförderten Artikeln
Device for the estimation of the geometry of articles transported on a conveyor

(30) Priorité: 07.07.1999 FR 9908798
(43) Date de publication de la demande: 10.01.2001
(73) Titulaire: XEDA INTERNATIONAL S.A., 13670 Saint-Andiol (FR)
(72) Inventeur: Sardo, Stefano, 13160 Chateaurenard (FR)
(74) Mandataire: Blot, Philippe Robert Emile

(56) Documents cités:
- EP-A- 0 847 927
- FR-A- 2 723 327
- GB-A- 982 609
- US-A- 5 315 879
- US-A- 5 723 797

## Description

La présente invention concerne un dispositif d'évaluation de la géométrie d'articles transportés par un convoyeur, tels que des fruits répartis dans une cagette reposant sur un convoyeur.

Un tel dispositif s'applique en particulier dans une installation d'étiquetage automatique de fruits disposés dans des cagettes.

Dans une telle installation, les cagettes contenant les fruits à étiqueter circulent sur un convoyeur à bande entraîné en continu. Les fruits sont répartis sur l'essentiel de la surface de la cagette en étant maintenus côte à côte suivant un agencement déterminé. A cet effet, les fruits sont par exemple reçus dans des alvéoles adjacents répartis en rangées et en colonnes dans la cagette.

Au-dessus du convoyeur sont disposés successivement un dispositif d'évaluation de la géométrie des fruits dans les cagettes et un dispositif d'étiquetage.

Le dispositif d'étiquetage comporte des têtes d'étiquetage réparties transversalement suivant la largeur du convoyeur. Chaque tête est associée à une rangée de fruits d'une cagette. Ainsi, pour un étiquetage satisfaisant, les têtes d'étiquetage doivent être espacées de l'intervalle existant entre les rangées de fruits dans les cagettes.

Afin de permettre l'étiquetage de fruits ayant des tailles différentes ou répartis suivant des agencements différents dans les cagettes, la position de chaque tête d'étiquetage est réglable transversalement par rapport au convoyeur. De plus, la position des têtes d'étiquetage est également réglable en hauteur. Le réglage de la position des têtes d'étiquetage est assuré par des moyens de motorisation commandés par une unité centrale de pilotage. La position des têtes d'étiquetage est modifiée en fonction de la géométrie des fruits disposés dans les cagettes.

Dans les installations connues, les dispositifs d'évaluation de la géométrie des fruits dans les cagettes comportent une ou plusieurs caméras disposées au-dessus du convoyeur. Ces caméras sont adaptées pour réaliser des images des cagettes comportant les fruits. Elles sont reliées à une unité centrale de traitement d'informations mettant en oeuvre des algorithmes de traitement d'images aptes à déduire des images des cagettes, la géométrie des fruits et leur position dans les cagettes.

Ces algorithmes sont extrêmement complexes et la fiabilité de l'évaluation de la géométrie ainsi réalisée est faible. En effet, la distinction entre les parties constitutives de la cagette et les fruits est extrêmement difficile à réaliser sur les images obtenues des cagettes circulantes.

Ainsi, ces solutions connues actuellement sont très coûteuses, délicates à mettre en oeuvre et d'une fiabilité modeste.

Le document US5315879A divulgue un dispositif d'évaluation de la géométrie des fruits transportés par un convoyeur, ce dispositif comportant un ensemble de palpeurs dont chaque palpeur comprend une extrémité de suivi qui est adaptée pour prendre appui sur les dits fruits lors de leur transport par le convoyeur, des moyens de mesure de la position de chaque palpeur et des moyens de calcul de la géométrie des articles en fonction de la position mesurée des palpeurs.

Le document FR-A-2723327 décrit aussi un dispositif d'évaluation de la géométrie des fruits comportant un palpeur.

L'invention a pour but de proposer un dispositif d'évaluation de la géométrie d'articles qui soit simple à mettre en oeuvre et qui, en particulier, nécessite des algorithmes de traitement réduits.

A cet effet, l'invention a pour objet un dispositif d'évaluation de la géométrie d'articles tels que des fruits transportés par un convoyeur, caractérisé en ce qu'il comporte :
- un bâti adapté pour être monté en regard du convoyeur,
- un ensemble de palpeurs (22) répartis suivant la largeur du convoyeur (12), lesquels palpeurs (22) sont portés par le bâti et montés mobile par rapport au bâti sous la commande des articles transportés par le convoyeur, chaque palpeur comportant une extrémité de suivi de la surface exposée d'un article lors de son transport par le convoyeur, laquelle extrémité de suivi est adaptée pour prendre appui sur l'article et déplacer le palpeur par rapport au bâti d'une grandeur représentative de la position, par rapport au convoyeur, du point de l'article où est appliquée l'extrémité de suivi du palpeur,
- des moyens de mesure de la position de chaque palpeur par rapport au bâti ; et
- des moyens de calcul de la géométrie des articles en fonction de la position mesurée du ou de chaque palpeur.

Suivant des modes particuliers de réalisation, le dispositif comporte l'une ou plusieurs des caractéristiques suivantes:
- chaque palpeur comporte un levier articulé sur le bâti autour d'un axe s'étendant sensiblement perpendiculairement à la direction d'avancement du convoyeur ;
- lesdits moyens de mesure comportent, pour chaque palpeur, un potentiomètre interposé entre chaque palpeur et le bâti ;
- lesdits moyens de mesure comportent une caméra fixe par rapport au bâti et adaptée pour l'observation du débattement d'une région repérée du ou de chaque palpeur, et des moyens de traitement d'images adaptés pour déduire la position de chaque palpeur à partir de ladite position de la région repérée sur l'image ; et
- ladite région repérée est formée par l'extrémité du levier formant palpeur opposée à l'extrémité de suivi des articles.

L'invention a en outre pour objet une installation d'étiquetage d'articles comportant un convoyeur de transport des articles au-dessus duquel sont disposés, suivant le sens d'avancement du convoyeur, un dispositif d'évaluation de la géométrie selon l'une quelconque des revendications précédentes, et un dispositif d'étiquetage comportant plusieurs têtes d'étiquetage mobiles transversalement suivant la largeur du convoyeur, l'installation comportant en outre une unité centrale de traitement d'informations adaptée pour le pilotage de la position des têtes d'étiquetage en fonction de la géométrie des articles à étiqueter évaluée par le dispositif d'évaluation.

Suivant des modes particuliers de réalisation, l'installation comporte l'une ou plusieurs des caractéristiques suivantes :
- le dispositif d'étiquetage comporte des moyens de réglage de hauteur des têtes d'étiquetage par rapport au convoyeur et au moins un organe de pressage des étiquettes disposé en arrière des têtes d'étiquetage en considérant le sens d'avancement du convoyeur, lequel organe est déplaçable en hauteur avec lesdites têtes d'étiquetage ; et
- ledit organe de pressage est un rouleau motorisé dont la vitesse de rotation est synchronisée avec la vitesse d'avancement du convoyeur.

L'invention sera mieux comprise à la lecture de la description qui va suivre, donnée uniquement à titre d'exemple et faite en se référant aux dessins sur lesquels :
- la figure 1 est une vue schématique en élévation d'une installation comportant un dispositif d'évaluation de la géométrie selon l'invention ;
- la figure 2 est une vue en perspective du convoyeur, du dispositif d'évaluation et des moyens d'étiquetage ;
- les figures 3 et 4 sont des vues schématiques en élévation du dispositif d'évaluation de la géométrie à deux stades différents du passage d'une cagette contenant des fruits ; et
- la figure 5 est une vue de face des palpeurs du dispositif d'évaluation lors du passage d'une cagette contenant des fruits.

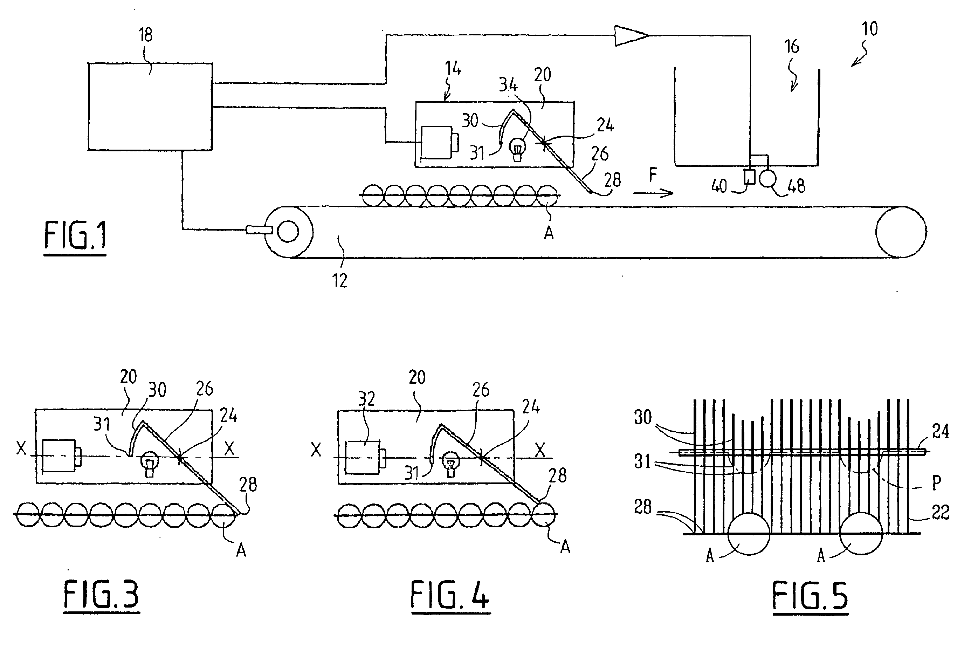

L'installation 10 représentée sur la figure 1 est destinée à l'étiquetage de fruits A disposés dans des cagettes C. Elle comporte un convoyeur 12 de transport des cagettes C au-dessus duquel sont disposés, successivement en considérant le sens F d'avancement du convoyeur 12, un dispositif 14 d'évaluation de la géométrie des articles à étiqueter et un dispositif 16 d'étiquetage des articles.

L'installation comporte en outre une unité centrale de traitement d'informations 18 à laquelle sont reliés le dispositif d'évaluation 14, le dispositif d'étiquetage 26 ainsi que des moyens 27 de motorisation du convoyeur 12.

Comme représenté également sur la figure 2, le dispositif d'évaluation 14 comporte un bâti 20 solidaire de la structure fixe du convoyeur. Le bâti 20 porte un ensemble de palpeurs mobiles 22 répartis transversalement suivant la largeur du convoyeur 12.

Les palpeurs 22 sont formés par des leviers librement articulés sur le bâti 20 autour d'un axe 24 s'étendant au-dessus de la surface de transport du convoyeur, perpendiculairement à la direction F d'avancement des articles à étiqueter. Les leviers 22 sont tous identiques et sont disposés cote à côte suivant l'essentiel de la largeur du convoyeur. Leur nombre est avantageusement compris entre 50 et 100 pour un convoyeur de 60 cm de large. Les leviers sont articulés indépendamment les uns des autres autour de l'axe 24.

Chaque levier 22 comporte un corps principal 26 formé d'une tige rectiligne. Le corps 26 du levier est articulé dans sa partie médiane autour de l'axe 24.

L'extrémité de la tige, en regard du convoyeur, forme une extrémité 28 de suivi de la surface supérieure des articles à étiqueter circulant sous le levier. Cette extrémité de suivi est adaptée pour prendre appui sur la surface des articles à étiqueter et ainsi provoquer le déplacement du levier lors du passage de l'article, ce déplacement étant représentatif de la position par rapport au convoyeur du point de contact du levier sur l'article.

A son autre extrémité, le corps 26 est prolongé par un tronçon formant bec, ce dernier étant constitué d'un arc de cercle centré sur l'axe 24. Chaque bec a son extrémité orientée vers le convoyeur. L'extrémité libre de chaque bec notée 31 forme une région repérée dont le déplacement est représentatif du mouvement du palpeur et notamment de son extrémité de suivi 28.

Les leviers sont articulés en un point de la longueur du corps 26 tel que, sous l'action de leur propre poids, l'extrémité de suivi 28 soit rappelée vers le bas en direction du convoyeur 12.

En outre, le dispositif d'évaluation 14 comporte une caméra 32 disposée en regard des becs 30. L'axe optique X-X de la caméra s'étend parallèlement à la direction F d'avancement des articles sur le convoyeur. Il passe avantageusement par l'axe 24. La caméra 32 est adaptée pour prendre une image regroupant l'ensemble des becs 30 et notamment leurs extrémités 31.

Afin de faciliter l'enregistrement de l'image, des moyens d'illumination 34 tels qu'une lampe sont disposés en arrière des becs 30.

La caméra 32 est reliée à l'unité centrale de traitement d'informations 18. Cette dernière comporte des moyens de traitement d'images permettant de déterminer la position de chaque palpeur et de calculer de la géométrie des articles circulant sur le convoyeur.

En particulier, les moyens de traitement d'image sont adaptés pour déterminer la courbe délimitée par l'ensemble des extrémités libres 31 de chacun des becs. A partir du profil de cette courbe, les moyens de calcul de la géométrie des articles détermine un profil de la coupe transversale de la cagette transportée et la position de ce profil par rapport au convoyeur. La succession des profils ainsi déterminée lors de l'avancement de la cagette assure une détermination de la topographie de la surface supérieure de la cagette contenant les articles à étiqueter par rapport au convoyeur 12.

Le dispositif d'étiquetage 16 comporte un ensemble de têtes d'étiquetage 40 portées par un portique 42 s'étendant transversalement au-dessus du convoyeur 12. Le portique 42 est réglable en hauteur par rapport au convoyeur grâce à des moyens de relevage tels que des vérins 44. Les vérins 44 sont reliés à l'unité centrale de traitement d'informations 18 pour leur pilotage.

Les têtes d'étiquetage 40 sont montées mobiles individuellement le long du portique 42. Elles sont associées chacune à des moyens de motorisation propres. Ces moyens de motorisation sont reliés à l'unité centrale de traitement d'informations 18 pour le réglage individuel de la position de chaque tête d'étiquetage 40. Ainsi, la position des têtes d'étiquetage suivant la direction transversale à la direction d'avancement des produits peut être réglée indépendamment pour chaque tête d'étiquetage.

En outre, le portique 42 porte un rouleau d'appui 48 monté rotatif autour d'un axe 50 s'étendant transversalement au sens d'avancement des produits et parallèlement au plan du convoyeur. Le rouleau 48 est entraîné en rotation par un moteur électrique dont la vitesse est synchronisée avec la vitesse de déplacement du convoyeur 12. Le rouleau 48 est disposé immédiatement en arrière des têtes d'étiquetage 40, en considérant le sens F d'avancement du convoyeur. L'axe 50 est disposé à un niveau tel que l'extrémité inférieure du rouleau 48 s'étende légèrement au-dessous du niveau des têtes d'étiquetage 40. Le rouleau 48 est avantageusement réalisé en mousse déformable élastiquement. Ce rouleau est destiné à favoriser l'adhérence des étiquettes préalablement déposées par les têtes d'étiquetage sur les articles.

L'installation 10 fonctionne de la manière suivante.

Comme illustré sur la figure 3, en l'absence d'articles sur le convoyeur, tous les palpeurs sont dans une même position stable de repos. L'extrémité 31 des palpeurs s'étend alors dans un même plan de référence comportant l'axe optique X-X de la caméra 32.

Au fur et à mesure du cheminement d'un article A, au-dessous de l'extrémité de suivi 28 d'un palpeur 22, le palpeur est déplacé angulairement autour de l'axe 24. Ainsi, le bec 30, et notamment son extrémité 31, est déplacé d'un intervalle représentatif du soulèvement de l'extrémité de suivi 28, comme illustré sur la figure 4.

Sous l'effet de son propre poids, chaque levier est maintenu constamment en appui sur la surface supérieure de l'un des produits ou dans sa position de repos.

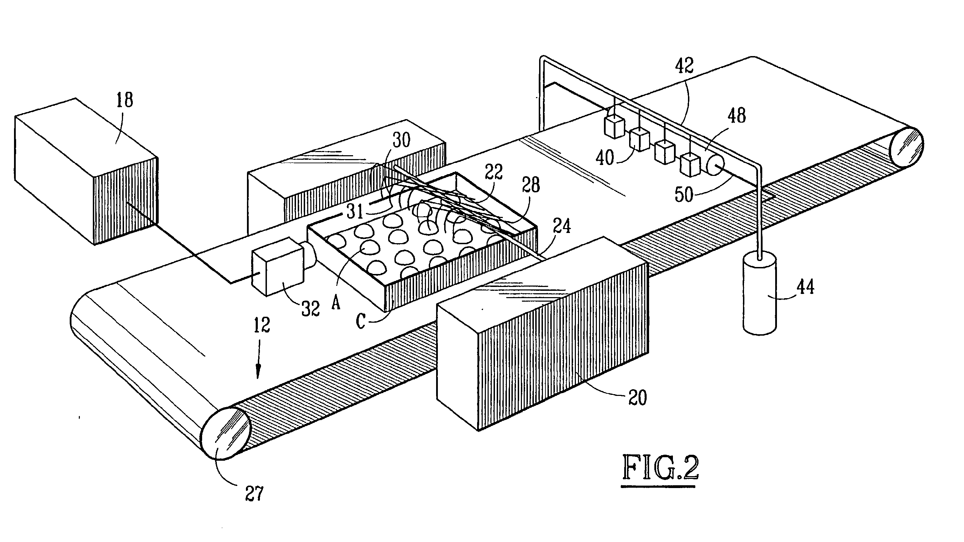

Comme illustré sur la figure 5, lors du passage d'une cagette comportant plusieurs articles disposés suivant une même colonne perpendiculaire à la direction d'avancement du convoyeur, les palpeurs 22 au-dessous desquels circule un article sont basculés d'un angle correspondant à la hauteur de la partie du produit circulant au-dessous.

Ainsi, les extrémités 31 des bec délimitent ensemble un profil noté P correspondant au profil inversé de la coupe transversale de la cagette comportant les produits suivant un plan correspondant sensiblement au plan dans lequel s'étendent les extrémités 28 des palpeurs.

L'image formée par la caméra 32 présente le profil P. Cette image est facilement analysée par l'unité centrale de traitement d'informations 18 puisque les extrémités des becs 30 se distinguent nettement sur l'image, notamment du fait de la source lumineuse 34 disposée en arrière.

A partir d'une succession d'images réalisées par exemple à intervalles réguliers lors de l'avancement d'une cagette transportée par le convoyeur, l'unité centrale de traitement d'informations 18 détermine une évaluation de la géométrie de la surface supérieure des articles agencés dans la cagette.

En tenant compte de l'intervalle temporel entre l'instant de passage d'un article considéré au-dessous des extrémités de suivi 28 des palpeurs, et l'instant de passage de la même partie de l'article au-dessous d'une tête d'étiquetage 42, l'unité centrale de traitement d'informations 18 pilote le déplacement des têtes d'étiquetage 40 et des moyens de relevage 42 afin d'assurer un positionnement correct des têtes d'étiquetage par rapport aux articles à étiqueter.

Lors du déplacement en hauteur des têtes d'étiquetage, le rouleau 48 se trouve également déplacer de sorte que celui-ci se trouve toujours dans une position satisfaisante pour exercer un appui sur les étiquettes préalablement déposées afin de favoriser leur adhérence. Le rouleau 48 étant entraîné en rotation par le moteur à une vitesse synchronisée avec celle du convoyeur, celui-ci n'exerce sur les articles aucune force suivant la direction de déplacement du convoyeur. Ainsi tout risque de déplacer des articles dans les cagettes est évité.

Suivant un mode de réalisation particulier, la caméra 32 est remplacée par un ensemble de potentiomètres disposés entre chaque palpeur et le bâti 20. La variation de la résistance du potentiomètre associé à chaque palpeur est représentative du déplacement du palpeur. Ainsi par la mesure de cette résistance, les moyens de traitement d'informations 18 déterminent la position de chaque palpeur.

Suivant encore un autre mode de réalisation, les palpeurs sont déplaçables à coulissement par rapport au bâti au lieu d'être articulé sur celui-ci. Les palpeurs sont par exemple maintenus entre des guides sensiblement verticaux. Les palpeurs sont sollicités vers le convoyeur sous l'action de leur propre poids.

## Revendications

1. Dispositif (14, 18) d'évaluation de la géométrie d'articles tels que des fruits transportés par un convoyeur (12) comportant:
- un bâti (20) adapté pour être monté en regard du convoyeur (12),
- un ensemble de palpeurs (22), lesquels palpeurs (22) sont portés par le bâti et montés mobiles par rapport au bâti (20) sous la commande des articles transportés par le convoyeur (12), chaque palpeur (22) comportant une extrémité (28) de suivi de la surface exposée d'un article lors de son transport par le convoyeur (12), laquelle extrémité de suivi (28) est adaptée pour prendre appui sur l'article et déplacer le palpeur (22) par rapport au bâti (20) d'une grandeur représentative de la position, par rapport au convoyeur (12), du point de l'article où est appliquée l'extrémité (28) de suivi du palpeur (22),
- des moyens (32) de mesure de la position de chaque palpeur (22) par rapport au bâti (20) ; et
- des moyens (18) de calcul de la géométrie des articles en fonction de la position mesurée de chaque palpeur (22).
**caractérisé en ce que** les palpeurs du dit ensemble de palpeurs (22) sont répartis suivant la largeur du convoyeur (12).

2. - Dispositif selon la revendication 1, **caractérisé en ce que** chaque palpeur (22) comporte un levier articulé sur le bâti (20) autour d'un axe (24) s'étendant sensiblement perpendiculairement à la direction d'avancement du convoyeur (12).

3. - Dispositif selon la revendication 1 ou 2, **caractérisé en ce que** lesdits moyens de mesure comportent, pour chaque palpeur (22), un potentiomètre interposé entre chaque palpeur (22) et le bâti (20).

4. - Dispositif selon la revendication 1 ou 2, **caractérisé en ce que** lesdits moyens de mesure comportent une caméra (32) fixe par rapport au bâti (20) et adaptée pour l'observation du débattement d'une région repérée (31) de chaque palpeur (22), et des moyens (18) de traitement d'images adaptés pour déduire la position de chaque palpeur (22) à partir de ladite position de la région repérée (31) sur l'image.

5. - Dispositif selon les revendications 2 et 4 prises ensemble, **caractérisé en ce que** ladite région repérée (31) est formée par l'extrémité (31) du levier formant palpeur opposée à l'extrémité de suivi (28) des articles.

6. - Installation d'étiquetage d'articles comportant un convoyeur (12) de transport des articles au-dessus duquel sont disposés, suivant le sens d'avancement du convoyeur, un dispositif d'évaluation de la géométrie (14, 18) selon l'une quelconque des revendications précédentes, et un dispositif d'étiquetage (16) comportant plusieurs têtes d'étiquetage (40) mobiles transversalement suivant la largeur du convoyeur, l'installation comportant en outre une unité centrale de traitement d'informations (18) adaptée pour le pilotage de la position des têtes d'étiquetage (40) en fonction de la géométrie des articles à étiqueter évaluée par le dispositif d'évaluation (14).

7. - Installation selon la revendication 6, **caractérisée en ce que** le dispositif d'étiquetage (16) comporte des moyens (44) de réglage de hauteur des têtes d'étiquetage (40) par rapport au convoyeur (12) et au moins un organe (48) de pressage des étiquettes disposé en arrière des têtes d'étiquetage (40) en considérant le sens d'avancement du convoyeur, lequel organe est déplaçable en hauteur avec lesdites têtes d'étiquetage (40).

8. - Installation selon la revendication 7, **caractérisée en ce que** ledit organe de pressage est un rouleau motorisé (48) dont la vitesse de rotation est synchronisée avec la vitesse d'avancement du convoyeur (12).

## Claims

1. Device (14, 18) for evaluating the geometry of items such as fruits carried on a conveyor (12), comprising:
- a frame (20) adapted to be mounted facing the conveyor (12),
- a set of probes (22), which are supported by the frame and mounted to be movable relative to the frame (20) under the control of the items carried by the conveyor (12), each probe (22) having one end (28) for tracking the exposed surface of an item while it is being transported by the conveyor (12), said tracking end (28) being adapted to bear on the item and move the probe (22) relative to the frame (20) by an amount representative of the position, relative to the conveyor (12), of the point on the article to which the tracking end (28) of the probe (22) is applied,
- means (32) for measuring the position of each probe (22) relative to the frame (20); and
- means (18) for calculating the geometry of the items as a function of the measured position of each probe (22),
**characterised in that** the probes of said set of probes (22) are distributed over the width of the conveyor (12).

2. Device according to claim 1, **characterised in that** each probe (22) comprises a lever articulated on the frame (20) about a spindle (24) extending substantially perpendicularly to the direction of advance of the conveyor (12).

3. Device according to claim 1 or 2, **characterised in that** said measuring means comprise, for each probe (22), a potentiometer interposed between each probe (22) and the frame (20).

4. Device according to claim 1 or 2, **characterised in that** said measuring means comprise a camera (32) which is fixed in relation to the frame (20) and adapted to observe the deflection of a marked region (31) of each probe (22), and image processing means (18) adapted to deduce the position of each probe (22) from said position of the marked region (31) on the image.

5. Device according to claims 2 and 4 taken together, **characterised in that** said marked region (31) is formed by the end (31) of the lever forming a probe opposite the end (28) for tracking the articles.

6. Apparatus for labelling items, comprising a conveyor (12) for transporting the items, above which are arranged, in the direction of travel of the conveyor, a device for evaluating the geometry (14, 18) according to any one of the preceding claims, and a labelling device (16) comprising a plurality of labelling heads (40) which are transversely movable in the direction of the width of the conveyor, said apparatus further comprising a central data processing unit (18) adapted to control the position of the labelling heads (40) as a function of the geometry of the items which are to be labelled, evaluated by the evaluating device (14).

7. Apparatus according to claim 6, **characterised in that** the labelling device (16) comprises means (44) for regulating the height of the labelling heads (40) relative to the conveyor (12) and at least one member (48) for pressing the labels, which is arranged behind the labelling heads (40) in terms of the direction of advance of the conveyor, said member being vertically movable with said labelling heads (40).

8. Apparatus according to claim 7, **characterised in that** said pressing member is a motorised roller (48) the speed of rotation of which is synchronised with the speed of advance of the conveyor (12).

## Patentansprüche

1. Vorrichtung (14, 18) zur Bewertung der Geometrie von Artikeln, wie etwa Früchten, die von einem Förderer (12) transportiert werden, umfassend:
- ein Gehäuse (20), dafür eingerichtet, dass es dem Förderer (12) gegenüber angehoben werden kann,
- eine Einheit aus mehreren Fühlern (22), wobei diese Fühler (22) vom Gehäuse getragen werden und relativ zum Gehäuse (20) unter der Einwirkung der vom Förderer (12) transportierten Artikel beweglich angebracht sind, wobei jeder Fühler (22) ein Ende (28) zum Abtasten der offenliegenden Oberfläche eines Artikels während seines Transportes durch den Förderer (12) aufweist, wobei dieses Abtastende (28) dafür ausgelegt ist, sich an den Artikel anzulegen und den Fühler (22) relativ zum Gehäuse (20) um einen Betrag zu bewegen, der der Stellung des Punktes des Artikels, in dem das Abtastende (28) des Fühlers (22) anliegt, relativ zum Förderer (12) entspricht,
- Mittel (32) zur Messung der Stellung jedes Fühlers (22) relativ zum Gehäuse (20), und
- Mittel (18) zur Berechnung der Geometrie der Artikel in Abhängigkeit von der gemessenen Stellung jedes Fühlers (22),
**dadurch gekennzeichnet, dass** die Fühler der genannten Einheit von Fühlern (22) in Richtung der Breite des Förderers (12) verteilt sind.

2. Vorrichtung nach Patentanspruch 1, **dadurch gekennzeichnet, dass** jeder Fühler (22) einen am Gehäuse (20) um eine Achse (24), die sich im Wesentlichen senkrecht zur Bewegungsrichtung des Förderers (12) erstreckt, angelenkten Hebel aufweist.

3. Vorrichtung nach Patentanspruch 1 oder 2, **dadurch gekennzeichnet, dass** die genannten Messmittel für jeden Fühler (22) ein Potentiometer umfassen, das zwischen jedem Fühler (22) und dem Gehäuse (20) eingefügt ist.

4. Vorrichtung nach Patentanspruch 1 oder 2, **dadurch gekennzeichnet, dass** die genannten Messmittel eine Kamera (32) umfassen, die relativ zum Gehäuse (20) unbeweglich ist und für die Beobachtung der Auslenkung eines markierten Bereichs (31) jedes Fühlers (22) eingerichtet ist, und Bildverarbeitungsmittel (18), die dafür eingerichtet sind, die Stellung jedes Fühlers (22) aus der genannten Stellung des markierten Bereichs (31) auf dem Bild abzuleiten.

5. Vorrichtung nach den Patentansprüchen 2 und 4 zusammen, **dadurch gekennzeichnet, dass** der genannte markierte Bereich (31) im Ende (31) des den Fühler darstellenden Hebels besteht, das dem Ende zum Abtasten (28) der Artikel entgegengesetzt ist.

6. Etikettieranlage für Artikel, einen Förderer (12) zum Transportieren der Artikel aufweisend, über dem in Bewegungsrichtung des Förderers eine Vorrichtung zur Bewertung der Geometrie (14, 18) nach irgendeinem der vorangehenden Patentansprüche und eine Etikettiervorrichtung (16), die mehrere in Querrichtung, längs der Breite des Förderers, bewegliche Etikettierköpfe (40) trägt, angeordnet sind, wobei die Anlage außerdem eine Informationsverarbeitungszentraleinheit (18) umfasst, die für die Steuerung der Stellung der Etikettierköpfe (40) in Abhängigkeit von der Geometrie der zu etikettierenden Artikel eingerichtet ist, die von der Bewertungsvorrichtung (14) bewertet wurde.

7. Anlage nach Patentanspruch 6, **dadurch gekennzeichnet, dass** die Etikettiervorrichtung (16) Mittel (44) zur Höhenverstellung der Etikettierköpfe (40) relativ zum Förderer (12) umfasst und mindestens ein Organ (48) zum Andrücken der Etiketten, das relativ zur Bewegungsrichtung des Förderers im hinteren Bereich der Etikettierköpfe (40) angeordnet ist, welches Organ mit den genannten Etikettierköpfen (40) höhenverstellbar ist.

8. Anlage nach Patentanspruch 7, **dadurch gekennzeichnet, dass** das genannte Andrückorgan eine motorisierte Rolle (48) ist, deren Rotationsgeschwindigkeit mit der Geschwindigkeit der Vorwärtsbewegung des Förderers (12) synchronisiert ist.
